# FASCICULE DE BREVET EUROPEEN

(11) **EP 4 374 051 B1**
(45) Date de publication et mention de la délivrance du brevet: **14.05.2025**
(21) Numéro de dépôt: 22757311.0
(22) Date de dépôt: 20.07.2022
(51) Int. Cl.: F01N 3/08, F01N 5/02, F01N 3/02, B01D 53/00

(54) **DISPOSITIF DE TRAITEMENT DE FUMÉES D'ÉCHAPPEMENT ÉMISES PAR UN APPAREIL CONSOMMATEUR DE CARBURANT**
VORRICHTUNG ZUR BEHANDLUNG VON ABGASEN AUS EINER KRAFTSTOFFVERBRAUCHSVORRICHTUNG
DEVICE FOR TREATING EXHAUST FUMES EMITTED BY A FUEL-CONSUMING APPARATUS

(30) Priorité: 23.07.2021 FR 2107990
(43) Date de publication de la demande: 29.05.2024
(73) Titulaire: GAZTRANSPORT ET TECHNIGAZ, 78470 Saint-Rémy-lès-Chevreuse (FR)
(72) Inventeur: BORISEVICH, Pavel, 78470 SAINT REMY LES CHEVREUSE (FR); AMAICHAN, Jaouad, 78280 SAINT REMY LES CHEVREUSE (FR); HOMSY, Charbel, 78280 SAINT REMY LES CHEVREUSE (FR)
(74) Mandataire: Ex Materia
(86) Numéro de dépôt international: PCT/FR2022/051443
(87) Numéro de publication internationale: WO 2023/002124

(56) Documents cités:
- EP-A1- 2 472 077
- WO-A1-2019/079531
- GB-A- 2 553 277

## Description

La présente invention concerne le domaine des moteurs alimentés par du gaz naturel, notamment les moteurs de propulsion ou d'entraînement d'accessoire qui équipe un navire apte à contenir et/ou transporter du gaz naturel liquéfié, ou les moteurs équipant un terminal gazier.

De tels navires comprennent ainsi classiquement des cuves qui contiennent du gaz naturel à l'état liquide. Le gaz naturel est liquide à des températures inférieures à -160°C, à pression atmosphérique. Ces cuves ne sont jamais parfaitement isolées thermiquement de sorte que le gaz naturel s'y évapore au moins partiellement. Ainsi, ces cuves comprennent à la fois du gaz naturel sous une forme liquide et du gaz naturel sous forme gazeuse. Ce gaz naturel sous forme gazeuse forme le ciel de cuve et la pression de ce ciel de cuve doit être contrôlée afin de ne pas endommager la cuve. De façon connue au moins une partie du gaz naturel présent dans la cuve sous forme gazeuse est ainsi utilisée pour alimenter, entre autres, les moteurs de propulsion du navire.

Ces moteurs consomment le gaz naturel et rejettent des fumées d'échappement. Par exemple ces fumées d'échappement peuvent envoyées vers la turbine d'un turbocompresseur afin d'entrainer un arbre de ce turbocompresseur, lui-même lié en rotation avec le compresseur du turbocompresseur. Ce compresseur est alors configuré pour comprimer de l'air et alimenter le moteur avec l'air ainsi comprimé.

Les fumées d'échappement émises par ces moteurs sont ensuite relâchées dans l'atmosphères. Ces fumées d'échappement résultant d'une combustion du gaz naturel fourni au moteur, elles contiennent une forte concentration de dioxyde de carbone. Ce dioxyde de carbone est alors rejeté dans l'atmosphère en même temps que le reste des fumées d'échappement.

Il est aujourd'hui connu que le dioxyde de carbone constitue l'un des principaux polluants aériens et de nouvelles normes sont progressivement mises place pour contraindre les armateurs à réduire significativement ces émissions de dioxyde de carbone, par exemple en capturant le CO₂ comme dans le document GB 2 553 277 A. La présente invention s'inscrit dans ce contexte en proposant un dispositif de traitement des fumées d'échappement adapté pour être installé sur un navire tel que défini ci-dessus et qui permet de réduire le taux de dioxyde de carbone dans ces fumées d'échappement.

Un objet de la présente invention concerne ainsi un dispositif de traitement d'au moins une partie des fumées d'échappement émises par au moins un appareil consommateur de carburant, par exemple d'un navire, le dispositif de traitement comprenant au moins un organe de compression configuré pour élever une pression d'au moins une partie des fumées d'échappement émises par l'appareil consommateur de carburant, et au moins une unité de captage de dioxyde de carbone présent dans les fumées d'échappement, l'organe de compression et l'unité de captage du dioxyde de carbone étant agencés entre l'appareil consommateur de carburant et un turbocompresseur dont une turbine est configurée pour être alimentée par les fumées d'échappement et dont un compresseur est configuré pour alimenter en comburant l'appareil consommateur de carburant.

Autrement dit, on comprend que le dispositif de traitement des fumées d'échappement selon l'invention permet de traiter au moins une partie des fumées émises par l'appareil consommateur de carburant avant que celles-ci ne soient réutilisées pour faire tourner le turbocompresseur et ainsi alimenter en comburant l'appareil consommateur de carburant. Avantageusement, un tel dispositif permet ainsi de réaliser la captation de dioxyde de carbone des fumées d'échappement à un moment où ces dernières présentent la plus forte concentration en dioxyde de carbone. Il en résulte que les équipements utilisés, et notamment l'unité de captage de dioxyde de carbone présentent des dimensions les plus faibles possibles, et donc un encombrement limité.

Le carburant peut être du gaz de pétrole liquéfié, du fioul lourd, du fioul à très faible teneur en soufre, du diesel, du méthanol, de l'essence avec plomb ou sans plomb, ou un fluide cryogénique, tel que du gaz naturel liquéfié, du gaz de pétrole liquéfié, , stocké dans une cuve, par exemple d'un navire équipé du dispositif de traitement des fumées et de l'appareil consommateur de carburant tels que décrits dans le présent document.

Selon une caractéristique de l'invention, le dispositif de traitement des fumées d'échappement comprend au moins un moyen de refroidissement configuré pour refroidir les fumées d'échappement émises par l'appareil consommateur de carburant, en amont de l'unité de captage du dioxyde de carbone, et au moins un moyen de chauffage configuré pour réchauffer les fumées d'échappement en aval de l'unité de captage. Les termes « amont » et « aval » s'entendent ici par rapport sens de déplacement des fumées d'échappement. Autrement dit le moyen de refroidissement est configuré pour refroidir les fumées chargées en dioxyde de carbone et le moyen de chauffage est configuré pour réchauffer les fumées déchargées du dioxyde de carbone. Avantageusement, le moyen de refroidissement et le moyen de chauffage peuvent fonctionner conjointement, c'est-à-dire que les calories présentes dans les fumées d'échappement chargées en dioxyde de carbone sont utilisées pour réchauffer les fumées d'échappement déchargées de ce dioxyde de carbone, ce qui permet, simultanément, de refroidir les fumées chargées en dioxyde de carbone.

Avantageusement, le dispositif de traitement des fumées d'échappement selon l'invention est configuré pour réduire la concentration de CO₂ dans les fumées d'échappement jusqu'à 80%, et avantageusement à un niveau de 40%. En d'autres termes, le dispositif de traitement selon l'invention est configuré pour que les fumées d'échappement rejetées dans l'atmosphère présentent une concentration en dioxyde de carbone inférieure de 40% par rapport à la concentration en dioxyde de carbone dans les fumées d'échappement qui quittent l'appareil consommateur de carburant.

Selon un premier exemple de réalisation de l'invention, l'unité de captage du dioxyde de carbone comprend un dispositif d'absorption adapté pour être traversé par l'au moins une partie des fumées d'échappement qui quitte l'organe de compression, ce dispositif d'absorption étant agencé sur un circuit de solvant dans lequel circule un solvant configuré pour capter le dioxyde de carbone présent dans lesdites fumées d'échappement. Selon une caractéristique de ce premier exemple de réalisation, le circuit de solvant peut comprendre au moins le dispositif d'absorption, un organe de mise en circulation du solvant, au moins un organe de régénération du solvant configuré pour permettre au solvant de se décharger du dioxyde de carbone capté, au moins un premier échangeur de chaleur configuré pour opérer un échange de chaleur entre le solvant chargé de dioxyde de carbone et le solvant déchargé de ce dioxyde de carbone et au moins une deuxième échangeur de chaleur configuré pour refroidir le solvant en amont du dispositif d'absorption, par rapport à un sens de circulation du solvant dans le circuit de solvant.

Par exemple, le solvant peut comprendre des amines, des sels aminés, une solution d'hydroxyde de sodium, une solution de bicarbonate ou une solution alcaline. A titre d'exemple, ce solvant peut comprendre l'un des composants suivants ou un mélange d'entre eux : monoethanolamine (MEA), aminoéthyléthanolamine (AEEA), hydroxyde de sodium (NaOH), sulfite d'hydrogène (H₂SO₃), diethanolamine (DEA), diéthylènetriamine (DETA), aminomethyl propanol (TEA), methyldiethanolamine (MDEA) et piperazine (PZ). Avantageusement, l'organe de régénération est configuré pour que le dioxyde de carbone qui y est déchargé puisse être récupérer sous forme liquide. Le dioxyde de carbone est ensuite stocké à l'état liquide et à haute pression.

Selon un deuxième exemple de réalisation, l'unité de captage du dioxyde de carbone comprend au moins un circuit de fluide réfrigérant sur lequel sont agencés au moins un premier échangeur thermique adapté pour opérer un échange de chaleur entre le fluide réfrigérant et du gaz prélevé à l'état liquide dans une cuve, par exemple d'un navire, et au moins un deuxième échangeur thermique adapté pour opérer un échange de chaleur entre le fluide réfrigérant refroidi par son passage à travers le premier échangeur thermique et l'au moins une partie des fumées d'échappement.

Il résulte de l'échange de chaleur qui s'opère au sein du deuxième échangeur thermique un givrage du dioxyde de carbone dans le deuxième échangeur thermique. Afin de récupérer le dioxyde de carbone, l'échangeur de chaleur est fermé de sorte que sa température augmente au moins jusqu'à la température de liquéfaction du dioxyde de carbone. Le dioxyde de carbone peut ensuite être stocké à l'état liquide et à haute pression, de façon similaire à ce qui est évoqué ci-dessus en référence au premier exemple de réalisation.

L'invention concerne aussi un système d'alimentation en gaz d'au moins un appareil consommateur de carburant, par exemple d'un navire de transport de gaz, le système d'alimentation comprenant au moins une cuve contenant un gaz à l'état liquide et à l'état gazeux, au moins une ligne d'alimentation en gaz de l'appareil consommateur de carburant, au moins un turbocompresseur configuré pour alimenter en comburant l'appareil consommateur de carburant et au moins un dispositif de traitement de fumées tel qu'évoqué ci-dessus, la ligne d'alimentation en gaz comprenant au moins un échangeur thermique configuré pour évaporer du gaz prélevé à l'état liquide dans la cuve et au moins un dispositif de compression adapté pour élever la pression du gaz jusqu'à une pression compatible avec les besoins de l'appareil consommateur de carburant.

La présente invention concerne aussi un procédé de traitement des fumées d'échappement émises par un appareil consommateur de carburant mettant en œuvre au moins un dispositif de traitement des fumées d'échappement tel qu'évoqué ci-dessus, le procédé comprenant au moins les étapes de :
- séparation des fumées d'échappement émises par l'appareil consommateur de carburant en une première partie des fumées d'échappement et en une deuxième partie des fumées d'échappement,
- alimentation de l'organe de compression avec la première partie des fumées d'échappement,
- compression de la première partie des fumées d'échappement par l'organe de compression,
- alimentation de l'unité de captage de dioxyde de carbone avec la première partie des fumées d'échappement comprimée,
- récupération du dioxyde de carbone présent dans la première partie des fumées d'échappement par l'unité de captage du dioxyde de carbone,
- mélange entre la première partie des fumées d'échappement qui quittent l'unité de captage du dioxyde de carbone avec la deuxième partie des fumées d'échappement pour former des fumées de mélangées,
- alimentation du turbocompresseur avec les fumées mélangées,
- refroidissement des fumées mélangées qui quittent le turbocompresseur,
- rejet dans l'atmosphère des fumées mélangées refroidies.

Selon une caractéristique du procédé de traitement des fumées selon l'invention, la deuxième partie des fumées d'échappement et la première partie des fumées d'échappement sont distinctes l'une de l'autre.

Par exemple, la première partie des fumées d'échappement représente entre 10% et 90% de la totalité de ces fumées d'échappement, et par exemple 50% de ces fumées d'échappement, tandis que la deuxième partie des fumées d'échappement représente entre 90 et 10% de la totalité de ces fumées d'échappement, et par exemple 50% de ces fumées d'échappement.

La première partie des fumées d'échappement et la deuxième partie des fumées d'échappement sont complémentaires l'une par rapport à l'autre pour former les fumées d'échappement émises par l'appareil consommateur de carburant.

La présente invention concerne en outre un navire de transport de gaz liquéfié, comprenant au moins un appareil consommateur de carburant et au moins un dispositif de traitement d'au moins une partie des fumées d'échappement émises par l'appareil consommateur de carburant, tel qu'évoqué ci-dessus.

La présente invention concerne enfin un système pour charger ou décharger un gaz liquide qui combine au moins une installation à terre et au moins un navire de transport de gaz liquide tel qu'évoqué ci-dessus.

L'invention vise aussi un procédé de chargement ou de déchargement d'un gaz liquide d'un navire tel qu'évoqué ci-dessus.

D'autres caractéristiques, détails et avantages de l'invention ressortiront plus clairement à la lecture de la description qui suit d'une part, et d'un exemple de réalisation donné à titre indicatif et non limitatif en référence aux dessins annexés d'autre part, sur lesquels :
[Fig. 1] illustre, schématiquement, un système d'alimentation en gaz d'au moins un appareil consommateur de carburant selon l'invention qui comprend au moins un dispositif de traitement des fumées d'échappement selon la présente invention ;
[Fig. 2] illustre, schématiquement, le système d'alimentation en gaz illustré sur la figure 1, selon une variante de réalisation de l'invention ;
[Fig. 3] illustre, schématiquement, un premier exemple de réalisation du dispositif de traitement des fumées d'échappement illustré sur la figure 1 ;
[Fig. 4] illustre, schématiquement, un deuxième exemple de réalisation du dispositif de traitement des fumées d'échappement illustré sur la figure 1 ;
[Fig. 5] est une représentation schématique écorchée d'une cuve de navire méthanier et d'un terminal de chargement et/ou de déchargement de cette cuve.

Dans la suite de la description, les termes « amont » et « aval » s'entendent selon un sens de circulation d'un fluide à l'état liquide, gazeux ou diphasique à travers l'élément concerné.

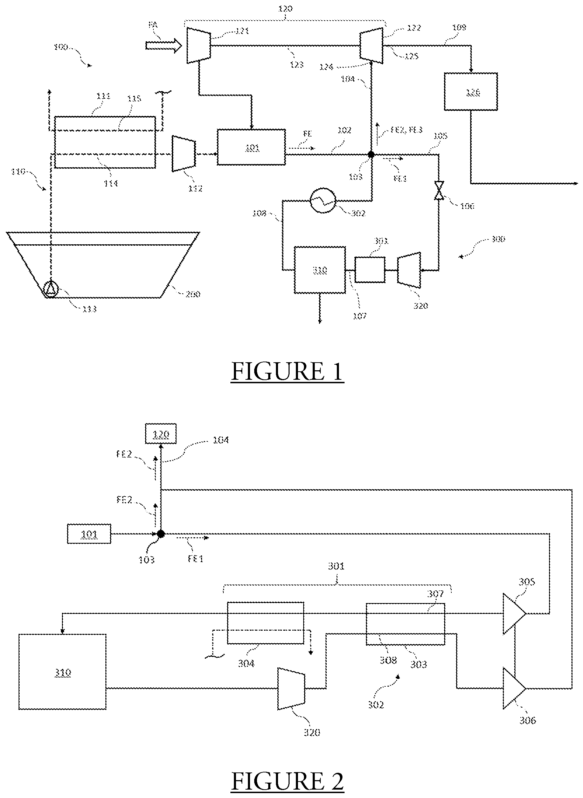

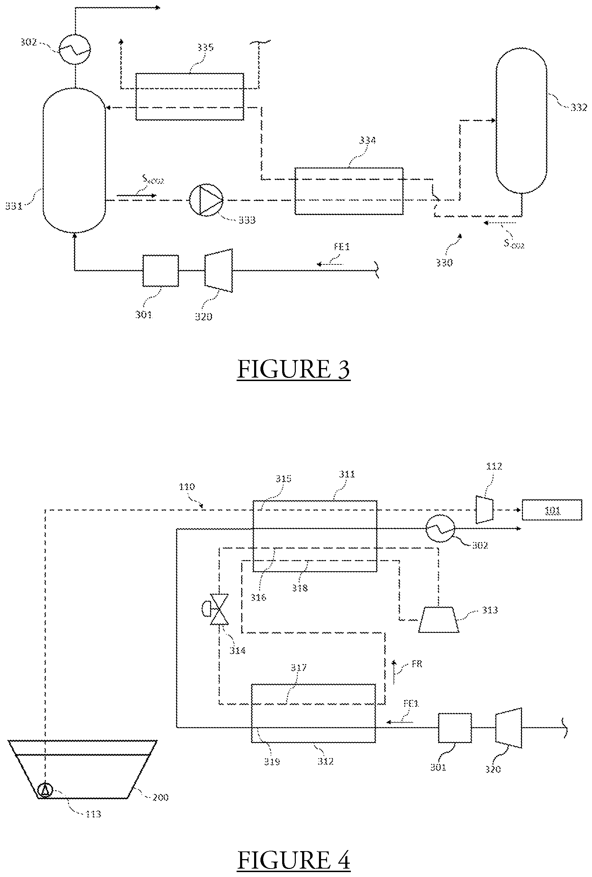

La figure 1 illustre, schématiquement, un système d'alimentation 100 en carburant d'au moins un appareil consommateur de carburant 101 qui comprend un dispositif de traitement 300 des fumées d'échappement émises par l'au moins un appareil consommateur de carburant 101, tandis que les figures 3 et 4 illustrent, schématiquement, le dispositif de traitement 300 des fumées d'échappement selon, respectivement, un premier exemple de réalisation de l'invention et un deuxième exemple de réalisation de l'invention. Tel que représenté, le système d'alimentation 100 comprend au moins une cuve 200 qui contient le carburant, par exemple un gaz destiné à l'alimentation de l'au moins un appareil consommateur de carburant 101, le gaz étant contenu dans cette cuve 200 à l'état liquide et à l'état gazeux. La description qui va suivre donne un exemple particulier d'application de la présente invention dans lequel la cuve 200 contient du gaz naturel liquéfié, du gaz de pétrole liquéfié, du fioul lourd, du fioul à très faible teneur en soufre, du diesel, du méthanol ou de l'essence avec plomb ou sans plomb. Il est entendu qu'il ne s'agit que d'un exemple d'application et que le système d'alimentation 100 en carburant selon l'invention peut être utilisé avec différents types de carburant liquide ou gazeux, tels que par exemple des gaz d'hydrocarbures ou d'hydrogène. De même, les figures illustrent des systèmes d'alimentation en carburant d'un appareil consommateur de carburant mais il est entendu que le système pourrait être adapté pour alimenter deux appareils consommateurs de gaz ou plus sans sortir du contexte de l'invention.

C'est ainsi que le système d'alimentation en carburant décrit dans le présent document peut être une système d'alimentation en gaz. Dans tout le présent document, l'appareil consommateur de carburant peut être considéré comme un appareil consommateur de gaz.

Dans la suite de la description, sauf indication contraire, les termes « appareil consommateur de carburant » désignent indifféremment un ou plusieurs appareil(s) consommateur(s) de gaz. En outre, les termes « système 100 » et « système d'alimentation 100 » sont utilisés sans distinction, tout comme les termes « fumées d'échappement émises par l'appareil consommateur de carburant », « fumées d'échappement » et « fumées », ainsi que les termes « appareil consommateur de carburant 101 » et « appareil 101 ». Sur les figures, les traits discontinus représentent des portions du circuit dans lesquelles circule du gaz prélevé dans la cuve ou un fluide réfrigérant et les traits pleins représentent des portions du circuit dans lesquelles circulent les fumées d'échappement émises par l'appareil consommateur de carburant.

La figure 1 illustre ainsi un système d'alimentation 100 selon l'invention qui comprend au moins la cuve 200 qui contient du gaz à l'état liquide et à l'état gazeux, au moins une ligne d'alimentation en gaz 110 de l'appareil consommateur de carburant 101, au moins un turbocompresseur 120 et au moins un dispositif de traitement 300 des fumées qui comprend au moins une unité de captage de dioxyde de carbone 310 - le dioxyde de carbone étant ci-après désigné par le symbole « CO₂» - au moins un moyen de refroidissement 301, au moins un moyen de chauffage 302 et au moins un organe de compression 320. Selon les exemples illustré, l'organe de compression 320 est agencé en amont de l'unité de captage 310 du CO₂. Autrement dit, selon ces exemples, les fumées d'échappement subissent une élévation de leur pression avant de rejoindre cette unité de captage 310. Alternativement, on pourra positionner l'organe de compression 320 en aval de cette unité de captage du CO₂. En tout état de cause, cet organe de compression 320 permet de compenser les pertes de charges liées au captage du CO₂ opéré par le dispositif de traitement 300.

Le moyen de refroidissement 301 permet quant à lui de diminuer la température des fumées d'échappement avant que celles-ci ne rejoignent l'unité de captage 310. Selon les exemples illustrés ce moyen de refroidissement 301 est agencé entre l'organe de compression 320 et l'unité de captage 310, mais il est entendu qu'il ne s'agit que d'un exemple de mise en œuvre de l'invention et que les positions de ces composants pourraient par exemple être inversées sans sortir du contexte de la présente invention. Le moyen de chauffage 302 est, selon l'exemple illustré sur la figure 1, agencé en aval de l'unité de captage 310 et sa fonction sera plus amplement détaillée ci-après. La figure 2 illustre une variante de réalisation du système 100 qui diffère ce qui est décrit ci-dessous, notamment par l'agencement du moyen de refroidissement 301, de l'organe de compression 320 et du moyen de chauffage 302 par rapport à l'unité de captage 310 du CO₂.

La ligne d'alimentation 110 comprend au moins un échangeur thermique 111 configuré pour évaporer du gaz prélevé dans la cuve 200 à l'état liquide et au moins un dispositif de compression 112 configuré pour élever la pression du gaz qui quitte l'échangeur thermique 111 jusqu'à une pression compatible avec les besoins de l'appareil consommateur de carburant 101. Autrement dit, le gaz qui quitte la ligne d'alimentation 110 est à l'état gazeux et présente une pression compatible avec les besoins de l'appareil consommateur de carburant 101.

L'exemple représenté illustre une situation dans laquelle le gaz est prélevé à l'état liquide dans la cuve 200. A cet effet, au moins une pompe 113 est agencée dans un fond de la cuve 200, c'est-à-dire que la pompe 113 est immergée dans le gaz présent à l'état liquide dans cette cuve 200. L'échangeur thermique 111 comprend au moins une première passe 114 et au moins une deuxième passe 115 et cet échangeur thermique 111 est configuré pour opérer un échange de chaleur entre un fluide qui circule dans sa première passe 114 et un fluide qui circule dans sa deuxième passe 115.

Tel que représenté, la première passe 114 de l'échangeur thermique 111 est alimentée par le gaz prélevé à l'état liquide dans la cuve 200. Le fluide qui circule dans la deuxième passe 115 de cet échangeur thermique 111 est alors choisi de sorte qu'un échange de chaleur entre ce fluide et le gaz à l'état liquide résulte en une évaporation de ce gaz à l'état liquide. Par exemple, le fluide qui circule dans la deuxième passe 115 peut être de l'eau de mer prélevée à proximité du navire équipé du système 100 selon l'invention. Le gaz circulant dans la première passe 114 capte ainsi des calories issues de l'eau de mer qui circule dans la deuxième passe 115 de sorte que ce gaz s'évapore et quitte la première passe 114 à l'état gazeux. Le gaz à l'état gazeux rejoint alors le dispositif de compression 112 dans lequel il subit une compression, c'est-à-dire une élévation de sa pression afin d'atteindre une pression compatible avec les besoins de l'appareil consommateur de carburant 101.

Selon un exemple non illustré ici, le gaz peut être prélevé à l'état gazeux dans la cuve, auquel cas l'échangeur thermique est configuré pour augmenter la température de ce gaz, sans que celui-ci ne change d'état. Le gaz réchauffé rejoint alors le dispositif de compression tel que décrit ci-dessus en référence à l'exemple illustré.

Selon les exemples illustrés, l'appareil consommateur de carburant 101 nécessite un apport en air. Cet appareil consommateur de carburant 101 peut être un moteur de propulsion, par exemple d'un navire équipé du système 100 selon l'invention. Afin de permettre l'alimentation en comburant de l'appareil consommateur de carburant 101, le système 100 comprend le turbocompresseur 120. Ce turbocompresseur 120 comprend au moins un compresseur 121 configuré pour aspirer un flux d'air FA et le comprimer, c'est-à-dire augmenter sa pression, avant de l'envoyer pour alimenter l'appareil 101 et au moins une turbine 122 quant à elle configurée pour entrainer en rotation un arbre 123 lié en rotation avec le compresseur 121. Avantageusement, la turbine 122 est alimentée par des fumées d'échappement émises par l'appareil consommateur de carburant 101. En d'autres termes, l'appareil consommateur de carburant 101 consomme du gaz prélevé dans la cuve 200 et émet, en sortie, des fumées d'échappement qui sont ensuite utilisées pour alimenter la turbine 122, cette turbine 122 entrainant à son tour l'arbre 123 qui entraine en rotation le compresseur 121 qui peut ainsi comprimer de l'air pour alimenter l'appareil consommateur de carburant 101. Les fumées d'échappement qui quittent le turbocompresseur 120 sont ensuite relâchées dans l'atmosphère.

Selon les exemples de réalisation illustrés sur les figures, les fumées d'échappement émises par l'appareil consommateur de carburant 101 présentent une pression d'environ 3 bar. Par exemple, ces fumées peuvent s'échapper de l'appareil 101 à une pression de 3,5 bar. Il est entendu qu'il ne s'agit que d'un exemple et que ces fumées d'échappement pourraient présenter une pression supérieure ou inférieure à 3 bar, sans sortir du contexte de la présente invention.

Afin de limiter l'impact du système 100 sur l'environnement, ce dernier comprend en outre le dispositif de traitement 300 des fumées d'échappement. Tel qu'évoqué précédemment, ce dispositif de traitement 300 comprend le moyen de refroidissement 301, le moyen de chauffage 302, l'organe de compression 320 et l'unité de captage 310 du CO₂. Les composants de l'unité de captage 310 sont détaillés ci-dessous et diffèrent selon l'exemple de réalisation mis en œuvre.

Nous allons maintenant décrire un procédé de traitement des fumées qui met en œuvre le système 100 selon l'invention, et plus particulièrement qui met en œuvre le dispositif de traitement 300 des fumées selon l'invention.

Le fonctionnement de la ligne d'alimentation 110 a été décrit ci-dessus et n'est pas repris en détail ici. Les fumées d'échappement FE émises par l'appareil consommateur de carburant 101 emprunte un premier conduit 102 qui s'étend entre l'appareil consommateur de carburant 101 et un point de raccordement 103 depuis lequel s'étendent au moins un deuxième conduit 104 et un troisième conduit 105, le troisième conduit 105 étant porteur d'au moins un organe de régulation de débit 106. On entend ici par « organe de régulation de débit », tout organe capable de réguler le débit des fumées dans le conduit qui le porte.

Le deuxième conduit 104 s'étend entre le point de raccordement 103 et le turbocompresseur 120, et plus particulièrement entre le point de raccordement 103 et une entrée 124 de la turbine 122 de ce turbocompresseur 120. Le troisième conduit 105 s'étend quant à lui entre le point de raccordement 103 et le dispositif de traitement 300. Selon l'exemple illustré, ce troisième conduit 105 s'étend plus particulièrement entre le point de raccordement 103 et l'organe de compression 320. Cet organe de compression 320 est connecté à l'unité de captage 310 du CO₂ grâce à un quatrième conduit 107 qui s'étend depuis cet organe de compression 320 et jusqu'à l'unité de captage 310 et ce quatrième conduit 107 porte le moyen de refroidissement 301. Le moyen de chauffage 302 est quant à lui agencé sur un cinquième conduit 108 qui s'étend entre l'unité de captage 310 et le point de raccordement 103.

Un sixième conduit 109 s'étend enfin entre une sortie 125 de la turbine 122 et un environnement extérieur au système 100 et ce sixième conduit 109 porte au moins un organe de refroidissement 126 des fumées d'échappement. Cet organe de refroidissement 126 est ainsi configuré pour refroidir les fumées d'échappement avant de relâcher celles-ci dans l'atmosphère.

Les fumées d'échappement FE émises par l'appareil consommateur de carburant 101 qui arrivent au niveau du point de raccordement 103 sont partagées en deux grâce à l'organe de régulation de débit 106. Ainsi, cet organe de régulation de débit 106 autorise une première partie FE1 des fumées d'échappement FE à emprunter le troisième conduit 105 tandis qu'une deuxième partie FE2 des fumées d'échappement est contrainte d'emprunter le deuxième conduit 104. Selon l'invention, la deuxième partie FE2 des fumées FE est distincte de la première partie FE1 de ces fumées d'échappement FE. Par exemple, la deuxième partie FE2 représente 90% à 10%, et notamment 50% de la totalité des fumées d'échappement FE et la première partie FE1 représente entre 10% et 90%, par exemple 50% de la totalité des fumées d'échappement FE, première partie FE1 et deuxième partie FE2 étant complémentaires l'une de l'autre pour représenter les 100% des fumées d'échappement.

Ainsi, la moitié des fumées FE émises par l'appareil consommateur de carburant 101 est directement dirigée vers l'entrée 124 de la turbine 122 tandis que l'autre moitié est dirigée vers le dispositif de traitement des fumées 300. En d'autres termes, seule la moitié des fumées d'échappement est traitée par le dispositif de traitement des fumées 300. Avantageusement, cela permet de réduire la taille des éléments qui constituent le dispositif de traitement des fumées 300, et donc l'encombrement total de ce dispositif de traitement des fumées 300.

La première partie des fumées d'échappement FE1 emprunte le troisième conduit 105 et rejoint l'organe de compression 320 et le moyen de refroidissement 301 dans lesquels ces fumées subissent une augmentation de leur pression et une diminution de leur température. Tel qu'évoqué ci-dessus, les fumées FE s'échappent de l'appareil consommateur de carburant 101 à une pression d'environ 3,5 bar. Selon l'exemple illustré, l'organe de compression 320 est alors configuré pour augmenter la pression de la première partie des fumées FE1 jusqu'à une pression d'environ 4,5 bar. La première partie des fumées FE1 à pression élevée et à température diminuée rejoint alors l'unité de captage 310 du CO₂ dans laquelle ces fumées sont déchargées d'au moins une partie du CO₂ qu'elles contiennent. Par exemple, cette unité de captage 310 du CO₂ est configurée pour retenir 80% du CO₂ présent dans cette première partie des fumées FE1. Ces fumées déchargées d'une grande partie du CO₂ empruntent alors le cinquième conduit 108 qui s'étend entre l'unité de captage 310 et le point de raccordement 103. Le long de ce cinquième conduit 108, la première partie des fumées FE1 traverse le moyen de chauffage 302 et voit sa température augmenter. La première partie des fumées FE1 rejoint ensuite le point de raccordement 103 au niveau duquel, cette première partie des fumées FE1, déchargées du CO₂, rejoint et se mélange avec la deuxième partie des fumées FE2 émises par l'appareil consommateur de carburant 101. Le mélange ainsi réalisé de la deuxième partie des fumées FE2 et de la première partie des fumées FE1 déchargées du CO₂ est alors utilisé pour alimenter la turbine 112 du turbocompresseur 121, c'est-à-dire que ce mélange emprunte le deuxième conduit 104 jusqu'à l'entrée 124 de la turbine 112. Dans la suite de la description, les fumées qui circulent dans ce deuxième conduit 104 sont ainsi appelées « fumées mélangées FE3 ».

On comprend de ce qui précède que les fumées mélangées FE3 qui circulent dans le deuxième conduit 104 présentent un taux de CO₂ inférieur au taux de CO₂ présent dans les fumées d'échappement FE émises par l'appareil consommateur de carburant, c'est-à-dire les fumées d'échappement FE qui circulent dans le premier conduit 102. Selon l'exemple illustré, les fumées mélangées FE3 présentent un taux de CO₂ inférieur de 40% par rapport au taux de CO₂ présent dans les fumées FE émises par l'appareil 101 et qui circulent dans le premier conduit 102.

Ces fumées mélangées FE3 appauvries en dioxyde de carbone peuvent alors être dirigées vers l'organe de refroidissement 126 afin d'être refroidies puis relâchées dans l'atmosphère.

La figure 2 illustre une variante de réalisation du système 100 illustré sur la figure 1 dans lequel le fonctionnement du moyen de refroidissement 301 et le fonctionnement du moyen de chauffage 302 dépendent l'un de l'autre. Afin de faciliter la compréhension de la figure, seul le dispositif de traitement 300 des fumées est représenté en détail sur cette figure 2.

Tel que représenté, le dispositif de traitement 300 selon cette variante de réalisation comprend au moins un premier moyen d'échange thermique 303, au moins un deuxième moyen d'échange thermique 304, au moins l'unité de captage 310 du CO₂ et au moins l'organe de compression 320.

La première partie des fumées FE1 rejoint ainsi dans un premier temps le premier moyen d'échange thermique 303, puis le deuxième moyen d'échange thermique 304 avant de rejoindre l'unité de captage 310 du CO₂. La première partie des fumées FE1 déchargée du CO₂ rejoint ensuite l'organe de compression 320 avant de passer à nouveau à travers le premier moyen d'échange thermique 303, puis de rejoindre le deuxième conduit 104 tel que décrit ci-dessus.

Particulièrement, le premier moyen d'échange thermique 303 prend ici la forme d'un échangeur de chaleur qui comprend au moins une première passe 307 dans laquelle circulent les fumées chargées de CO₂ et au moins une deuxième passe 308 dans laquelle circulent les fumées déchargées du CO₂. Le premier moyen d'échange thermique 303 permet ainsi d'opérer un échange de chaleur entre les fumées chargées en CO₂ et les fumées déchargées en CO₂ qui résulte en une élévation de la température des fumées déchargées du CO₂ et en une diminution de la température des fumées chargées en CO₂. Les fumées réchauffées peuvent ainsi être remélangées, dans le deuxième conduit 104, aux fumées émises par l'appareil consommateur de carburant 101 et qui ne sont pas traitées par le dispositif de traitement 300 des fumées. Les fumées chargées en CO₂ sont quant à elle partiellement refroidies et elles rejoignent le deuxième moyen d'échange thermique 304 quant à lui configuré pour opérer un échange de chaleur entre ces fumées partiellement refroidies et de l'eau de mer de sorte à refroidir encore les fumées et ainsi permettre leur traitement par l'unité de captage 310. Par exemple, on pourra prévoir que les fumées rejoignent l'unité de captage 310 du CO₂ à une température d'environ 35°C alors qu'elles arrivent à l'entrée du premier moyen d'échange thermique 303 à une température d'environ 350°C.

Tel que précédemment évoqué, le passage à travers l'unité de captage 310 du CO2 entraine une perte de charge qui doit être compensée avant de retourner les fumées déchargées du CO2 dans le deuxième conduit 104. Ainsi, selon cette variante, l'organe de compression 320 est agencé en aval de l'unité de captage 310 du CO2 par rapport à un sens de circulation des fumées au sein du dispositif de traitement 300.

Ainsi, on comprend que le moyen de refroidissement 301 est, selon la variante illustrée sur la figure 2, réalisé par le premier moyen d'échange thermique 303 et par le deuxième moyen d'échange thermique 304 tandis que le moyen de chauffage 302 est réalisé par le premier moyen d'échange thermique 303. Également l'organe de compression 320 participe à élever la température des fumées déchargées du CO₂ en élevant leur pression. Un tel agencement permet ainsi d'utiliser la chaleur transportée par les fumées directement, sans avoir à apporter d'énergie extérieure au dispositif de traitement 300 des fumées.

Optionnellement, un séparateur de débit 305 peut être agencé en amont du premier moyen d'échange thermique 303, par rapport à un sens de circulation des fumées chargées en CO₂ et un mélangeur de débit 306 peut être agencé en aval de ce premier moyen d'échange thermique 303 par rapport à un sens de circulation des fumées déchargées du CO₂.

En référence aux figures 3 et 4, nous allons maintenant décrire deux exemples de réalisation du dispositif de traitement 300 des fumées, la figure 3 illustrant le dispositif de traitement 100 selon un premier exemple de réalisation et la figure 4 illustrant le dispositif de traitement 100 selon un deuxième exemple de réalisation.

Selon le premier exemple de réalisation, le captage du CO₂ est réalisé grâce à un solvant tandis que selon le deuxième exemple de réalisation, l'unité de captage permet de réaliser un captage dit « cryogénique ». En d'autres termes, le premier exemple de réalisation se distingue du deuxième exemple de réalisation par les éléments qui constituent l'unité de captage 310. Selon d'autres exemples de réalisation non illustrés, le captage du CO₂ est réalisé par procédé membranaire, par absorption non-chimique, c'est-à-dire sans solvant, ou par adsorption.

Selon le premier exemple de réalisation représenté sur la figure 3, l'unité de captage 310 du CO₂ comprend ainsi un circuit de solvant 330, c'est-à-dire un circuit dans lequel circule du solvant 330, l'organe de compression 320, le moyen de refroidissement 301 et le moyen de chauffage 302. La figure 3 illustre un exemple de réalisation dans lequel le moyen de refroidissement 301, le moyen de chauffage 302 et l'organe de compression 320 sont réalisés selon l'exemple illustré sur la figure 1, mais il est entendu qu'ils pourraient être agencés tel que décrit et illustré sur la variante représentée sur la figure 2 sans sortir du contexte de la présente invention.

Le circuit de solvant 330 comprend au moins un dispositif d'absorption 331 configuré pour extraire le CO₂ des fumées d'échappement, au moins un organe de régénération 332 configuré pour extraire le CO₂ du solvant, au moins un organe de mise en circulation 333 du solvant, au moins un premier échangeur de chaleur 334 configuré pour opérer un échange de chaleur entre le solvant S_{+CO2} chargé de dioxyde de carbone et le solvant S_{-CO2} déchargé de ce dioxyde de carbone et au moins un deuxième échangeur de chaleur 335 configuré pour refroidir le solvant en amont du dispositif d'absorption 331, c'est-à-dire le solvant déchargé du CO₂.

Ainsi, la première partie des fumées d'échappement FE1 rejoint, dans un premier temps, le dispositif d'absorption 331 au sein duquel il est mis en contact avec le solvant qui circule dans le circuit de solvant 330. Le solvant est choisi pour sa capacité à réagir avec le dioxyde de carbone présent dans les fumées de sorte à extraire ce CO₂ de ces fumées. La première partie des fumées d'échappement FE1 quitte ainsi le dispositif d'absorption 331 déchargé d'une partie de son CO₂. Selon l'invention, le dispositif de traitement 300 des fumées est plus particulièrement configuré pour que la première partie des fumées FE1 quitte le dispositif d'absorption déchargé d'environ 80% du CO₂ qu'elle transporte. Par exemple, le solvant peut comprendre des amines, des sels aminés, une solution d'hydroxyde de sodium, une solution de bicarbonate ou une solution alcaline. A titre d'exemple, ce solvant peut comprendre l'un des composants suivants ou un mélange d'entre eux : monoethanolamine (MEA), aminoéthyléthanolamine (AEEA), hydroxyde de sodium (NaOH), sulfite d'hydrogène (H₂SO₃), diethanolamine (DEA), diéthylènetriamine (DETA), aminomethyl propanol (TEA), methyldiethanolamine (MDEA) et piperazine (PZ).

Le solvant S_{+CO2} chargé en CO₂ quitte le dispositif d'absorption 331 pour rejoindre le premier échangeur de chaleur 334. Ce solvant S_{+CO2} rejoint ensuite l'organe de régénération 332 dans lequel il se décharge du CO₂ capté dans le dispositif d'absorption 331. Le solvant S_{-CO2} déchargé de ce dioxyde de carbone quitte l'organe de régénération 332 pour rejoindre, à nouveau, le premier échangeur de chaleur 334 dans lequel il échange des calories avec le solvant S_{+CO2} chargé en CO₂. Il résulte de cet échange de chaleur que le solvant S_{+CO2} chargé en CO₂ est réchauffé tandis que le solvant S_{-CO2} déchargé en CO₂ est refroidi. L'organe de régénération 332 est quant à lui adapté pour permettre la récupération du CO₂ à l'état liquide afin de permettre son stockage. Plus particulièrement, le CO₂ est récupéré sous forme liquide puis comprimé pour être stocké à haute pression.

Le solvant déchargé S_{-CO2} refroidi rejoint ensuite le deuxième échangeur de chaleur 335 dans lequel il subit un nouveau refroidissement. Par exemple, ce deuxième échangeur de chaleur 335 peut être configuré pour opérer un échange de chaleur entre le solvant S_{-CO2} déchargé refroidi par son passage à travers le premier échangeur de chaleur 334 et de l'eau de mer. Il est entendu qu'il ne s'agit que d'un exemple de réalisation et que l'eau de mer pourrait être remplacée par n'importe quel fluide réfrigérant connu et compatible avec l'invention, sans sortir du contexte de cette invention. En tout état de cause, le circuit de solvant 330, et plus généralement le dispositif de traitement des fumées 300, est configuré pour que les fumées et le solvant déchargé S_{-CO2} rejoignent le dispositif d'absorption 331 à des températures équivalentes. Par exemple, les fumées et le solvant déchargé S_{-CO2} peuvent présenter une température de l'ordre de 35°C en entrée du dispositif d'absorption 331.

Le solvant S_{-CO2} déchargé du CO₂ et refroidi peut alors rejoindre, à nouveau, le dispositif d'absorption 331 et recommencer un cycle sur le circuit de solvant 330.

La figure 4 illustre enfin le dispositif de traitement 300 des fumées selon le deuxième exemple de réalisation de l'invention. Tel qu'évoqué précédemment, le captage du CO₂ selon le deuxième exemple de réalisation est réalisé par cryogénisation du CO₂. Autrement dit, ce deuxième exemple de réalisation consiste à refroidir au moins une partie des fumées d'échappement jusqu'à une température à laquelle le CO₂ devient solide. Aux pressions en jeu, cette température est de l'ordre de -125°C.

A cet effet, l'unité de captage 310 de CO₂ comprend au moins un premier échangeur thermique 311 configuré pour opérer un échange de chaleur entre du gaz prélevé à l'état liquide dans la cuve 200 et un fluide réfrigérant FR et au moins un deuxième échangeur thermique 312 configuré pour opérer un échange de chaleur entre la première partie des fumées d'échappement FE1 et le fluide réfrigérant FR. Tel que représenté, le premier échangeur thermique 311 et le deuxième échangeur thermique 312 sont agencés sur un circuit de fluide réfrigérant FR qui comprend en outre au moins un moyen de compression 313 configuré pour élever la pression du fluide réfrigérant FR et au moins un moyen de détente 314 configuré pour réduire la pression de ce fluide réfrigérant FR. Ainsi, le premier échangeur thermique 311 comprend au moins une première passe 315 qui participe à former la ligne d'alimentation 110 de l'appareil consommateur de carburant 101 et au moins une deuxième passe 316 parcourue par le fluide réfrigérant FR.

On comprend de ce qui précède que le premier échangeur thermique 311 a la même fonction que l'échangeur thermique de la ligne d'alimentation décrit ci-dessus en référence à la figure 1, à savoir permettre l'évaporation du gaz prélevé à l'état liquide dans la cuve 200 en vue d'alimenter l'appareil consommateur de carburant 101. Le premier échangeur thermique 311 diffère ainsi de l'échangeur thermique décrit précédemment en ce qu'il est configuré pour opérer un échange de chaleur entre du fluide réfrigérant FR et du gaz prélevé dans la cuve 200 plutôt qu'entre le gaz prélevé dans la cuve 200 et de l'eau de mer.

Le dispositif de traitement 300 selon ce deuxième exemple de réalisation comprend également le moyen de refroidissement 301 et le moyen de chauffage 302. L'exemple représenté sur la figure 4 reprend l'agencement décrit en référence à la figure 1 mais il est entendu que le moyen de refroidissement 301 et le moyen de chauffage 302 pourraient être agencé selon l'exemple illustré et décrit en référence à la figure 2 sans sortir du contexte de la présente invention.

On entend ici par « fluide réfrigérant », tout fluide configuré pour capter, échanger et transporter des calories en changeant d'état. Ainsi, le fluide réfrigérant FR rejoint le moyen de compression 313 à l'état gazeux et à basse pression et le quitte à l'état gazeux et à haute pression. Le fluide réfrigérant FR rejoint alors le premier échangeur thermique 311, et plus particulièrement la deuxième passe 316 de ce premier échangeur thermique 311, dans lequel il cède des calories, notamment au gaz qui circule dans la première passe 315, de sorte que ce fluide réfrigérant se condense. Le fluide réfrigérant FR rejoint ensuite le moyen de détente 314 au sein duquel il subit une diminution de sa pression. Le fluide réfrigérant rejoint ainsi le deuxième échangeur thermique 312 à l'état liquide ou diphasique et à basse pression, et plus particulièrement une première passe 317 de ce deuxième échangeur thermique 312. Au sein de ce deuxième échangeur thermique 312, le fluide réfrigérant capte des calories de sorte qu'il s'évapore et quitte ce deuxième échangeur thermique 312 à l'état gazeux et à basse pression pour rejoindre, à nouveau, le moyen de compression 313 et entamer un nouveau cycle. Avantageusement, le fluide réfrigérant FR peut, tel qu'illustré sur la figure 4, repasser à travers le premier échangeur thermique 311, et plus particulièrement à travers une troisième passe 318 de ce premier échangeur thermique 311, avant de rejoindre le moyen de compression 313. Ainsi, la deuxième passe 315 et la troisième passe 318 de ce premier échangeur thermique 311 forment un échangeur de chaleur interne qui permet de pré-refroidir le fluide réfrigérant en amont du moyen de détente 315, c'est-à-dire le fluide réfrigérant qui circule dans la deuxième passe 316, et de préchauffer le fluide réfrigérant en amont du moyen de compression 313, c'est-à-dire le fluide réfrigérant qui circule dans la troisième passe 318 de ce premier échangeur thermique 311.

Les termes « basse pression » et « haute pression » s'entendent ici relativement l'un par rapport à l'autre, c'est-à-dire que les termes « basse pression » signifient « pression inférieure à la haute pression ». Les termes « amont » et « aval » s'entendent quant à eux par rapport à un sens de circulation du fluide réfrigérant FR au sein du circuit de fluide réfrigérant.

La première partie des fumées d'échappement FE1 rejoint quant à elle, dans un premier temps le deuxième échangeur thermique 312, et plus particulièrement une deuxième passe 319 de ce deuxième échangeur thermique 312, dans lequel elle cède des calories au fluide réfrigérant FR de sorte à évaporer ce fluide réfrigérant et à refroidir les fumées FE1. Le dispositif de traitement 300 des fumées d'échappement est configuré pour que le refroidissement opéré au sein de ce deuxième échangeur thermique 312 soit suffisant pour entrainer une solidification du CO₂ présent dans la première partie des fumées FE1. Particulièrement, le CO₂ givre dans le deuxième échangeur thermique 312, de sorte que les fumées qui quittent ce deuxième échangeur thermique présentent un taux de CO₂ qui est40% inférieur au taux que présentait ces mêmes fumées en amont du deuxième échangeur thermique 312. Les fumées déchargées du CO₂ rejoignent alors le premier échangeur thermique 311, et plus particulièrement une quatrième passe 410 de ce premier échangeur thermique 311, dans lequel elle capte des calories émises par le fluide réfrigérant FR de sorte à réchauffer ces fumées et à condenser le fluide réfrigérant FR. Les fumées déchargées du CO₂ peuvent alors être réchauffées par le moyen de chauffage 302 puis re-mélangées à la deuxième partie des fumées d'échappement quant à elle directement envoyée vers le turbocompresseur tel qu'évoqué précédemment.

Enfin, le deuxième échangeur thermique 312 peut être mis à l'arrêt, de sorte que sa température augmente et ainsi que le CO₂ présent à l'état de givre dans ce deuxième échangeur thermique 312 puisse fondre afin d'être récupéré puis stocké à l'état liquide et à haute pression.

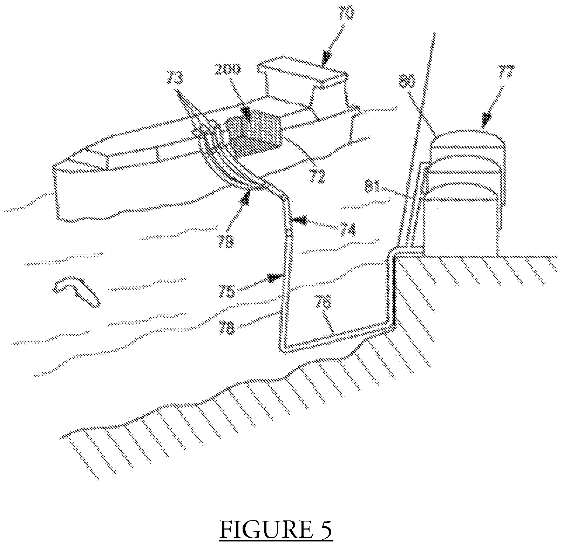

Enfin, la figure 5 est une vue écorchée d'un navire 70 qui montre la cuve 200 qui contient le gaz à l'état liquide et à l'état gazeux, cette cuve 200 étant de forme générale prismatique montée dans une double coque 72 du navire. Cette cuve 200 peut faire partie d'un méthanier mais il peut également s'agir d'un réservoir quand le gaz est exploité comme carburant de l'appareil consommateur de carburant.

La paroi de la cuve 200 comporte une membrane d'étanchéité primaire destinée à être en contact avec le gaz à l'état liquide contenu dans la cuve, une membrane d'étanchéité secondaire agencée entre la membrane d'étanchéité primaire et la double coque 72 du navire 70, et deux barrières isolantes agencées respectivement entre la membrane d'étanchéité primaire et la membrane d'étanchéité secondaire et entre la membrane d'étanchéité secondaire et la double coque 72.

Des canalisations de chargement et/ou de déchargement 73 disposées sur le pont supérieur du navire peuvent être raccordées, au moyen de connecteurs appropriées, à un terminal maritime ou portuaire pour transférer la cargaison de gaz à l'état liquide depuis ou vers la cuve 200, ce gaz étant par exemple du gaz naturel liquéfié, du gaz de pétrole liquéfié, du fioul lourd, du fioul à très faible teneur en soufre, du diesel, du méthanol ou de l'essence avec ou sans plomb.

La figure 5 représente également un exemple de terminal maritime comportant un poste de chargement et/ou de déchargement 75, une conduite sous-marine 76 et une installation à terre 77. Le poste de chargement et/ou de déchargement 75 est une installation fixe off-shore comportant un bras mobile 74 et une tour 78 qui supporte le bras mobile 74. Le bras mobile 74 porte un faisceau de canalisations isolées 79 pouvant se connecter aux canalisations de chargement et/ou de déchargement 73. Le bras mobile 74 orientable s'adapte à tous les gabarits de navire. Le poste de chargement et de déchargement 75 permet le chargement et/ou le déchargement du navire 70 depuis ou vers l'installation à terre 77. Celle-ci comporte des cuves de stockage de gaz liquéfié 80 et des conduites de liaison 81 reliées par la conduite sous-marine 76 au poste de chargement ou de déchargement 75. La conduite sous-marine 76 permet le transfert du gaz liquéfié entre le poste de chargement ou de déchargement 75 et l'installation à terre 77 sur une grande distance, par exemple cinq kms, ce qui permet de garder le navire 70 à grande distance de la côte pendant les opérations de chargement et/ou de déchargement.

Pour engendrer la pression nécessaire au transfert du gaz liquéfié, on met en œuvre une ou des pompes de déchargement portées par la tour de chargement et/ou de déchargement de la cuve 200 et/ou des pompes équipant l'installation à terre 77 et/ou des pompes équipant le poste de chargement et de déchargement 75.

Bien sûr, l'invention n'est pas limitée aux exemples qui viennent d'être décrit et de nombreux aménagements peuvent être apportés à ces exemples sans sortir du cadre de l'invention.

La présente invention propose ainsi un dispositif de traitement des fumées d'échappement émises par un appareil consommateur de carburant, notamment de gaz, d'un navire, tel qu'un moteur de propulsion de ce navire, qui permet de réduire significativement la concentration de dioxyde de carbone présente dans ces fumées d'échappement avant de les relâchées dans l'atmosphère.

La présente invention ne saurait toutefois se limiter aux moyens et configurations décrits et illustrés ici et elle s'étend également à tout moyen et toute configuration équivalents ainsi qu'à toute combinaison techniquement opérante de tels moyens. En particulier la forme et la disposition du moyen de refroidissement, du moyen de chauffage et de l'organe de compression peuvent être modifiées sans nuire à l'invention dans la mesure où elles remplissent les fonctionnalités décrites dans le présent document.

## Revendications

1. Dispositif de traitement (300) d'au moins une partie des fumées d'échappement émises par au moins un appareil consommateur de carburant (101), le dispositif de traitement (300) comprenant au moins un organe de compression (320) configuré pour élever une pression d'au moins une partie des fumées d'échappement (FE1) émises par l'appareil consommateur de carburant (101) et au moins une unité de captage (310) de dioxyde de carbone présent dans les fumées d'échappement (FE1), l'organe de compression (320) et l'unité de captage (310) du dioxyde de carbone (CO₂) étant agencés entre l'appareil consommateur de carburant (101) et un turbocompresseur (120) dont une turbine (122) est configurée pour être alimentée par les fumées d'échappement (FE2, FE3) et dont un compresseur (121) est configuré pour alimenter en comburant l'appareil consommateur de carburant (101).

2. Dispositif de traitement (300) selon la revendication précédente, comprenant au moins un moyen de refroidissement (301) configuré pour refroidir les fumées d'échappement (FE1) émises par l'appareil consommateur de carburant (101), en amont de l'unité de captage (310) du dioxyde de carbone, et au moins un moyen de chauffage (302) configuré pour réchauffer les fumées d'échappement (FE1) en aval de l'unité de captage (310).

3. Dispositif de traitement (300) selon l'une quelconque des revendications précédentes, dans lequel l'unité de captage (310) du dioxyde de carbone (CO₂) comprend un dispositif d'absorption (331) adapté pour être traversé par l'au moins une partie des fumées d'échappement (FE1) qui quitte l'organe de compression (320), ce dispositif d'absorption (331) étant agencé sur un circuit de solvant (330) dans lequel circule un solvant (S_{+CO2}, S_{-CO2}) configuré pour capter le dioxyde de carbone (CO₂) présent dans lesdites fumées d'échappement (FE1).

4. Dispositif de traitement (300) selon la revendication précédente, dans lequel le circuit de solvant (330) comprend au moins le dispositif d'absorption (331), un organe de mise en circulation (333) du solvant, au moins un organe de régénération (332) du solvant configuré pour permettre au solvant de se décharger du dioxyde de carbone (CO₂) capté, au moins un premier échangeur de chaleur (334) configuré pour opérer un échange de chaleur entre le solvant chargé de dioxyde de carbone (S_{+CO2}) et le solvant déchargé de ce dioxyde de carbone (S_{-CO2}) et au moins un deuxième échangeur de chaleur (335) configuré pour refroidir le solvant (S_{-CO2}) en amont du dispositif d'absorption (331), par rapport à un sens de circulation du solvant dans le circuit de solvant (330).

5. Dispositif de traitement (300) selon l'une quelconque des revendications 1 à 3, dans lequel l'unité de captage (310) du dioxyde de carbone (CO₂) comprend au moins un circuit de fluide réfrigérant (FR) sur lequel sont agencés au moins un premier échangeur thermique (311) adapté pour opérer un échange de chaleur entre le fluide réfrigérant (FR) et du gaz prélevé à l'état liquide dans une cuve (200), et au moins un deuxième échangeur thermique (312) adapté pour opérer un échange de chaleur entre le fluide réfrigérant (FR) refroidi par son passage à travers le premier échangeur thermique (311) et l'au moins une partie des fumées d'échappement (FE1).

6. Système d'alimentation (100) en gaz d'au moins un appareil consommateur de carburant, le système d'alimentation (100) comprenant au moins une cuve (200) contenant un gaz à l'état liquide et à l'état gazeux, au moins une ligne d'alimentation (110) en gaz de l'appareil consommateur de carburant (101), au moins un turbocompresseur (120) configuré pour alimenter en comburant l'appareil consommateur de carburant (101) et au moins un dispositif de traitement (300) de fumées selon l'une quelconque des revendications précédentes, la ligne d'alimentation (110) en gaz comprenant au moins un échangeur thermique (111) configuré pour évaporer du gaz prélevé à l'état liquide dans la cuve (200) et au moins un dispositif de compression (112) adapté pour élever la pression du gaz jusqu'à une pression compatible avec les besoins de l'appareil consommateur de carburant (101).

7. Procédé de traitement des fumées d'échappement (FE) émises par un appareil consommateur de carburant (101) mettant en œuvre au moins un dispositif de traitement (300) des fumées d'échappement selon l'une quelconque des revendications 1 à 6, le procédé comprenant au moins les étapes de :
- séparation des fumées d'échappement (FE) émises par l'appareil consommateur de carburant (101) en une première partie des fumées d'échappement (FE1) et en une deuxième partie des fumées d'échappement (FE2),
- alimentation de l'organe de compression (320) avec la première partie des fumées d'échappement (FE1),
- compression de la première partie des fumées d'échappement (FE1) par l'organe de compression (320),
- alimentation de l'unité de captage (310) de dioxyde de carbone (CO₂) avec la première partie des fumées d'échappement (FE1) comprimée,
- récupération du dioxyde de carbone (CO₂) présent dans la première partie des fumées d'échappement (FE1) par l'unité de captage (310) du dioxyde de carbone (CO₂),
- mélange entre la première partie des fumées d'échappement (FE1) qui quittent l'unité de captage (310) du dioxyde de carbone avec la deuxième partie des fumées d'échappement (FE2) pour former des fumées de mélangées (FE3),
- alimentation du turbocompresseur (120) avec les fumées mélangées (FE3),
- refroidissement des fumées mélangées (FE3) qui quittent le turbocompresseur (120),
- rejet dans l'atmosphère des fumées mélangées (FE3) refroidies.

8. Procédé de traitement des fumées d'échappement selon la revendication précédente, dans lequel la première partie des fumées d'échappement (FE1) et la deuxième partie des fumées d'échappement (FE2) sont distinctes l'une de l'autre.

9. Procédé de traitement des fumées d'échappement selon l'une quelconque des revendications 8 ou 9, dans lequel la première partie des fumées d'échappement (FE1) représente entre 10% et 90% de la totalité de ces fumées d'échappement (FE), tandis que la deuxième partie des fumées d'échappement (FE2) représente entre 90% et 10% de la totalité de ces fumées d'échappement (FE).

10. Navire (70) de transport de gaz liquéfié, comprenant au moins un appareil consommateur de carburant (101) et au moins un dispositif de traitement (300) d'au moins une partie des fumées d'échappement (FE) émises par l'appareil consommateur de carburant (101) selon l'une quelconque des revendications 1 à 6.

11. Système (100) pour charger ou décharger un gaz liquide qui combine au moins une installation à terre (77) et au moins un navire (70) de transport de gaz liquide selon la revendication précédente.

12. Procédé de chargement ou de déchargement d'un gaz liquide d'un navire (70) de transport de gaz selon la revendication 11.

## Patentansprüche

1. Vorrichtung (300) zur Behandlung mindestens eines Teils der von mindestens einem Kraftstoff verbrauchenden Gerät (101) ausgestoßenen Abgase, wobei die Behandlungsvorrichtung (300) mindestens ein Verdichtungselement (320), das dazu bestimmt ist, einen Druck mindestens eines Teils der von dem Kraftstoff verbrauchenden Gerät (101) ausgestoßenen Abgase (FE1) zu erhöhen, und mindestens eine Einheit (310) zum Auffangen von in den Abgasen (FE1) vorhandenem Kohlendioxid umfasst, wobei das Verdichtungselement (320) und die Einheit (310) zum Auffangen von Kohlendioxid (CO₂) zwischen der Kraftstoff verbrauchenden Vorrichtung (101) und einem Turbolader (120) angeordnet sind, von dem eine Turbine (122) zum Antrieb durch die Abgase (FE2, FE3) und ein Verdichter (121) zur Versorgung der Kraftstoff verbrauchenden Vorrichtung (101) mit Oxidationsmittel ausgebildet sind.

2. Behandlungsvorrichtung (300) nach dem vorhergehenden Anspruch, umfassend mindestens ein Kühlmittel (301), das dazu bestimmt ist, die von dem Kraftstoff verbrauchenden Gerät (101) ausgestoßenen Abgase (FE1) stromaufwärts von der Einheit (310) zum Auffangen von Kohlendioxid zu kühlen, und mindestens ein Heizmittel (302), das dazu bestimmt ist, die Abgase (FE1) stromabwärts von der Einheit (310) zum Auffangen zu erwärmen.

3. Behandlungsvorrichtung (300) nach einem der vorhergehenden Ansprüche, wobei die Einheit (310) zum Auffangen von Kohlendioxid (CO₂) eine Absorptionsvorrichtung (331) umfasst, die geeignet ist, dass zumindest ein Teil der Abgase (FE1), die das Verdichtungselement (320) verlassen, durch sie hindurchgeht, wobei diese Absorptionsvorrichtung (331) in einem Lösungsmittelkreislauf (330) angeordnet ist, in dem ein Lösungsmittel (S_{+CO2}, S_{-CO2}) zirkuliert, das dazu bestimmt ist, das in den Abgasen (FE1) vorhandene Kohlendioxid (CO₂) einzufangen.

4. Behandlungsvorrichtung (300) nach dem vorhergehenden Anspruch, wobei der Lösungsmittelkreislauf (330) mindestens die Absorptionsvorrichtung (331), ein Element (333) zum Umwälzen des Lösungsmittels, mindestens ein Element (332) zum Regenerieren des Lösungsmittels, das so ausgelegt ist, dass es dem Lösungsmittel ermöglicht, abgeschiedenes Kohlendioxid (CO₂) zu entladen, und mindestens einen ersten Wärmetauscher (334), der dazu bestimmt ist, Wärme zwischen dem mit Kohlendioxid (S_{+CO2}) beladenen Lösungsmittel und dem Lösungsmittel, aus dem dieses Kohlendioxid (S_{-CO2}) entladen wurde, auszutauschen, und mindestens einen zweiten Wärmetauscher (335), der dazu bestimmt ist, das Lösungsmittel (S_{-CO2}) stromaufwärts der Absorptionsvorrichtung (331) in Bezug auf eine Umlaufrichtung des Lösungsmittels im Lösungsmittelkreislauf (330) abzukühlen.

5. Behandlungsvorrichtung (300) nach einem der Ansprüche 1 bis 3, wobei die Einheit (310) zum Auffangen von Kohlendioxid (CO₂) mindestens einen Kältemittelkreislauf (FR) umfasst, in dem mindestens ein erster Wärmetauscher (311), der geeignet ist, Wärme zwischen dem Kältemittel (FR) und einem aus einem Tank (200) entnommenen Gas im flüssigen Zustand auszutauschen und mindestens einen zweiten Wärmetauscher (312), der geeignet ist, Wärme zwischen dem Kältemittel (FR), das durch seinen Durchgang durch den ersten Wärmetauscher (311) gekühlt wird, und dem mindestens einen Teil der Abgase (FE1) auszutauschen.

6. System (100) zur Versorgung mindestens eines Brennstoff verbrauchenden Geräts mit Gas, wobei das Versorgungssystem (100) mindestens einen Tank (200), der ein Gas im flüssigen Zustand und im Dampfzustand enthält, mindestens eine Leitung (110) zur Versorgung des Brennstoff verbrauchenden Geräts (101) mit Gas, mindestens einen Turbolader (120), der dazu bestimmt ist, dem Brennstoff verbrauchenden Gerät (101) ein Oxidationsmittel zuzuführen und mindestens eine Vorrichtung (300) zur Behandlung von Abgasen nach einem der vorhergehenden Ansprüche, wobei die Gasversorgungsleitung (110) mindestens einen Wärmetauscher (111), der dazu bestimmt ist, das aus dem Tank (200) entnommene Gas im flüssigen Zustand zu verdampfen, und mindestens eine Kompressionsvorrichtung (112) umfasst, die geeignet ist, den Druck des Gases auf einen mit den Bedürfnissen des Brennstoffverbrauchers (101) kompatiblen Druck zu erhöhen.

7. Verfahren zur Behandlung von Abgasen (FE), die von einem Kraftstoff verbrauchenden Gerät (101) abgegeben werden, unter Verwendung mindestens einer Vorrichtung (300) zur Behandlung von Abgasen nach einem der Ansprüche 1 bis 6, wobei das Verfahren mindestens die folgenden Schritte umfasst:
- Trennen der von der Kraftstoff verbrauchenden Vorrichtung (101) ausgestoßenen Abgase (FE) in einen ersten Teil der Abgase (FE1) und einen zweiten Teil der Abgase (FE2);
- Versorgung des Verdichtungselements (320) mit dem ersten Teil der Abgase (FE1);
- Komprimieren des ersten Teils der Abgase (FE1) mit Hilfe des Verdichtungselements (320);
- Versorgung der Einheit (310) zum Auffangen von Kohlendioxid (CO₂) mit dem ersten Teil der komprimierten Abgase (FE1);
- Rückgewinnung des im ersten Teil der Abgase (FE1) vorhandenen Kohlendioxids (CO₂) mit Hilfe der Einheit (310) zum Auffangen von Kohlendioxid (CO₂);
- Mischen des ersten Teils der Abgase (FE1), die die Einheit (310) zum Auffangen von Kohlendioxid verlassen, mit dem zweiten Teil der Abgase (FE2), um Mischabgase (FE3) zu bilden;
- Versorgung des Turboladers (120) mit den gemischten Abgasen (FE3);
- Kühlung der gemischten Abgase (FE3), die den Turbolader (120) verlassen; und
- Abgabe der gekühlten Mischabgase (FE3) an die Atmosphäre.

8. Verfahren zur Behandlung von Abgasen nach dem vorhergehenden Anspruch, wobei der erste Teil der Abgase (FE1) und der zweite Teil der Abgase (FE2) voneinander verschieden sind.

9. Verfahren zur Behandlung von Abgasen nach Anspruch 8 oder Anspruch 9, wobei der erste Teil der Abgase (FE1) zwischen 10 % und 90 % aller dieser Abgase (FE) ausmacht, während der zweite Teil der Abgase (FE2) zwischen 90 % und 10 % aller dieser Abgase (FE) ausmacht.

10. Schiff (70) zum Transport von Flüssiggas, mit mindestens einem Kraftstoff verbrauchenden Gerät (101) und mindestens einer Vorrichtung (300) zur Behandlung mindestens eines Teils der von dem Kraftstoff verbrauchenden Gerät (101) abgegebenen Abgase (FE) nach einem der Ansprüche 1 bis 6.

11. System (100) zum Be- oder Entladen eines Flüssiggases, wobei das System mindestens eine Anlage (77) an Land und mindestens ein Schiff (70) zum Transport von Flüssiggas nach dem vorhergehenden Anspruch kombiniert.

12. Verfahren zum Laden oder Entladen von Flüssiggas aus einem Gastransportschiff (70) nach Anspruch 11.

## Claims

1. Device (300) for treating at least a portion of the exhaust fumes emitted by at least one fuel-consuming apparatus (101), the treatment device (300) comprising at least one compression member (320) designed to raise a pressure of at least a portion of the exhaust fumes (FE1) emitted by the fuel-consuming apparatus (101), and at least one unit (310) for capturing carbon dioxide present in the exhaust fumes (FE1), the compression member (320) and the unit (310) for capturing carbon dioxide (CO₂) being arranged between the fuel-consuming apparatus (101) and a turbocharger (120), a turbine (122) of which is designed to be powered by the exhaust fumes (FE2, FE3) and a compressor (121) of which is designed to supply the fuel-consuming apparatus (101) with oxidizer.

2. Treatment device (300) according to the preceding claim, comprising at least one cooling means (301) designed to cool the exhaust fumes (FE1) emitted by the fuel-consuming apparatus (101), upstream of the unit (310) for capturing carbon dioxide, and at least one heating means (302) designed to heat the exhaust fumes (FE1) downstream of the capture unit (310).

3. Treatment device (300) according to any of the preceding claims, wherein the unit (310) for capturing carbon dioxide (CO₂) comprises an absorption device (331) suitable for the at least a portion of the exhaust fumes (FE1) leaving the compression member (320) to pass therethrough, this absorption device (331) being arranged on a solvent circuit (330) in which a solvent (S_{+CO2}, S_{-CO2}) designed to capture the carbon dioxide (CO₂) present in said exhaust fumes (FE1) circulates.

4. Treatment device (300) according to the preceding claim, wherein the solvent circuit (330) comprises at least the absorption device (331), a member (333) for circulating the solvent, at least one member (332) for regenerating the solvent designed to allow the solvent to unload captured carbon dioxide (CO₂), at least a first heat exchanger (334) designed to exchange heat between the solvent loaded with carbon dioxide (S_{+CO2}) and the solvent from which this carbon dioxide (S_{-CO2}) has been unloaded, and at least a second heat exchanger (335) designed to cool the solvent (S_{-CO2}) upstream of the absorption device (331) with respect to a direction of circulation of the solvent in the solvent circuit (330).

5. Treatment device (300) according to any of claims 1 to 3, wherein the unit (310) for capturing carbon dioxide (CO₂) comprises at least one refrigerant circuit (FR) on which are arranged at least a first heat exchanger (311) suitable for exchanging heat between the refrigerant (FR) and gas taken from a tank (200) in the liquid state, and at least a second heat exchanger (312) suitable for exchanging heat between the refrigerant (FR) cooled by its passage through the first heat exchanger (311) and the at least a portion of the exhaust fumes (FE1).

6. System (100) for supplying at least one fuel-consuming apparatus with gas, the supply system (100) comprising at least one tank (200) containing a gas in the liquid state and in the vapor state, at least one line (110) for supplying the fuel-consuming apparatus (101) with gas, at least one turbocharger (120) designed to supply to the fuel-consuming apparatus (101) with oxidizer, and at least one device (300) for treating fumes according to any of the preceding claims, the gas supply line (110) comprising at least one heat exchanger (111) designed to evaporate the gas taken from the tank (200) in the liquid state and at least one compression device (112) suitable for raising the pressure of the gas to a pressure compatible with the needs of the fuel-consuming apparatus (101).

7. Method for treating exhaust fumes (FE) emitted by a fuel-consuming apparatus (101) using at least one device (300) for treating exhaust fumes according to any of claims 1 to 6, the method comprising at least the steps of:
- separating the exhaust fumes (FE) emitted by the fuel-consuming apparatus (101) into a first portion of the exhaust fumes (FE1) and a second portion of the exhaust fumes (FE2);
- supplying the compression member (320) with the first portion of the exhaust fumes (FE1);
- compressing the first portion of the exhaust fumes (FE1) by means of the compression member (320);
- supplying the unit (310) for capturing carbon dioxide (CO₂) with the first portion of the compressed exhaust fumes (FE1);
- recovering the carbon dioxide (CO₂) present in the first portion of the exhaust fumes (FE1) by means of the unit (310) for capturing carbon dioxide (CO₂);
- mixing the first portion of the exhaust fumes (FE1) leaving the unit (310) for capturing carbon dioxide with the second portion of the exhaust fumes (FE2) to form mixed fumes (FE3);
- supplying the turbocharger (120) with the mixed fumes (FE3);
- cooling the mixed fumes (FE3) leaving the turbocharger (120); and
- emitting the cooled mixed fumes (FE3) to the atmosphere.

8. Method for treating exhaust fumes according to the preceding claim, wherein the first portion of the exhaust fumes (FE1) and the second portion of the exhaust fumes (FE2) are different from each other.

9. Method for treating exhaust fumes according to either claim 8 or claim 9, wherein the first portion of the exhaust fumes (FE1) represents between 10% and 90% of all of these exhaust fumes (FE), while the second portion of the exhaust fumes (FE2) represents between 90% and 10% of all of these exhaust fumes (FE).

10. Ship (70) for transporting liquefied gas, comprising at least one fuel-consuming apparatus (101) and at least one device (300) for treating at least a portion of the exhaust fumes (FE) emitted by the fuel-consuming apparatus (101) according to any of claims 1 to 6.

11. System (100) for loading or unloading a liquid gas, the system combining at least one onshore facility (77) and at least one ship (70) for transporting liquid gas according to the preceding claim.

12. Method for loading or unloading liquid gas from a gas transport ship (70) according to claim 11.
